# EUROPEAN PATENT APPLICATION

(11) **EP 3 537 051 A1**
(43) Date of publication of application: **11.09.2019**
(21) Application number: 18160995.9
(22) Date of filing: 09.03.2018
(51) Int. Cl.: F24D 19/10, G05D 23/19, G05B 17/00

(54) **METHOD, APPARATUS AND COMPUTER PROGRAM PRODUCT FOR CONTROLLING HEATING SYSTEMS**

(71) Applicant: Liljegren Development AB, 167 39 Bromma (SE)
(72) Inventor: Liljegren, Eric, 167 39 Bromma (SE); Liljegren, Johan, 167 39 Bromma (SE)
(74) Representative: AWA Sweden AB

(57) **Abstract**

The present disclosure relates to an adaptive method for controlling the heating of an indoor environment of a building using forecasted weather data, and an apparatus for executing said adaptive method, said method comprising the steps of: providing forecasted weather data for a predetermined forecasting time; determining an input signal for the heating system based on said forecasted weather data and at least one building specific coefficient; sending the input signal to the heating system for modifying the climate of said indoor environment, wherein the method further comprises the steps of measuring an indoor temperature with respect to the predetermined forecasting time; determining an indoor temperature deviation by comparing the measured indoor temperature with an indoor target temperature; adjusting the input signal with respect to the indoor temperature deviation.

## Description

### Technical field

The present disclosure relates to a method and an apparatus for controlling heating systems to effectively heat an indoor environment, and particularly an apparatus and a method that is self-learning and predictive with respect to weather forecasting.

### Technical background

Indoor temperature regulation commonly involves the use of a heating control system designed to regulate the indoor temperature by comparing a desired indoor temperature - a target temperature - to a reference temperature, possibly a reference indoor temperature, and varying the heating of the indoor environment accordingly. Installing such a heating control system to a building have proven to greatly conserve energy, thereby reducing economic costs and the environmental impact. Thus, there is a large interest to improve such a heating control system for optimized energy usage.

Common solutions today set the reference temperature as the actual outdoor temperature, rather than the actual indoor temperature, as it makes the heating control system more alert to temperature changes and is better equipped for controlling the heating more optimally. However, this requires that the heating control system converts the measured actual outdoor temperature into a corresponding heating command, for example by referring to a temperature-heating curve for the specific indoor environment to be heated. This however may lead to suboptimal heating as this temperature-heating curve, when determined, may not account for variations in the indoor environments affecting the thermodynamic conditions of said indoor environment. Furthermore, it may also not account for rapid fluctuations of the outdoor temperature caused by, for instance, blocked sunlight, wind and rainfall.

A number of inventions have been presented that aim to alleviate at least some of these issues. Particularly, heating control systems may possibly be designed to operate according to a model which accounts for more weather parameters than just the outdoor temperature, such as solar radiation. Furthermore, the model may further account for building specific parameters, for instance the intended use and the size of the indoor environment. Both types of parameters may be accounted for in said model. However, such a model may end up being relatively complicated and would require careful calibration in order for the operation of the heating control system to result in an improved energy efficiency during heating overall. Furthermore, it is often difficult to determine the exact relationship between each parameter and how they affect the heat loss of the indoor environment. Finally, such a heating control system may be more susceptible to error due to more parameters being accounted for.

Hence, there is a need for an improved apparatus and method for controlled heating of an indoor environment.

### Summary

It is an object of the present invention to provide an improved solution that alleviates some of the mentioned drawbacks with the present solutions. Furthermore, it is an object to provide a method and an apparatus for controlling a heating system of an indoor environment of a building.

According to a first aspect of the invention, an adaptive method for controlling a heating system is provided. The method comprises the steps of: providing forecasted weather data for a predetermined forecasting time; determining an input signal for the heating system based on said forecasted weather data and at least one building specific coefficient; sending the input signal to the heating system for modifying the climate of said indoor environment, wherein the method further comprises the steps of measuring an indoor temperature with respect to the predetermined forecasting time; determining an indoor temperature deviation by comparing the measured indoor temperature with an indoor target temperature; adjusting the input signal with respect to the indoor temperature deviation.

By taking into account forecasted weather data, the adaptive method may preemptively adjust the heating of a building to account for predicted heat exchanges between the indoor environment of a building and the outdoor environment. By making adjustments over time, the adaptive method may reduce the indoor temperature deviation. The adaptive method may find a well-adjusted mode in which the indoor temperature deviation has been reduced to an acceptable level, possibly down to substantially negligible fluctuations. The adaptive method may find such a well-adjusted mode for any weather condition if given sufficient time to adjust. When the adaptive method has found such a well-adjusted mode for any weather condition, the adaptive method may thus preemptively adopt the adjustments of an appropriate well-adjusted mode when receiving information about a similar forecasted weather condition. This solves the issue of delayed adjustment present with previous methods, as the adjustments are made prior to the occurrence of a weather condition and not after, thus leading to improvements in terms of indoor temperature deviation and energy efficiency.

A further advantage of this method over previous solutions is that it solves the problem of efficient heating without relying on a complicated heating model. The method may adjust to a specific building during the heating in response to forecasted weather data. The method can be advantageously pre-calibrated for a specific building to account for the specific houses capability of storing heat and/or its rate of heat gain or heat loss relative the outdoor environment. The method can also be pre-calibrated with respect to the type of heating system used to heat the building. This may eliminate the need of cumbersome recalibration of a model if a building is renovated or changed otherwise that in any way affects its insulation property.

In one embodiment, the forecasted weather data comprises a forecasted outdoor temperature and a forecasted weather parameter, said weather parameter being selected from a group of weather parameters comprising solar radiation, sun position, air humidity, atmospheric pressure, wind speed, wind direction, rainfall, snowfall and cloudiness. The adaptive method may thus adjust the heating with respect to different weather factors. This may provide an opportunity to adjust differently with respect to two or more different weather conditions that are similar with respect to a few select weather parameters but ultimately impact the heat exchange differently. A greater variety in weather parameters that may be accounted may thus result in improved adjustments. Furthermore, the adaptive method may use previous adjustments while making preemptive adjustments if similar weather conditions are forecasted. Both of these characteristics may further improve heating efficiency and thus reduce costs.

In one further embodiment, the method further comprising the step of providing a forecasted outdoor temperature adjusted by at least one weather parameter. The adjusted forecasted outdoor temperature may indicate a more veridical heat exchange between the indoor environment and the outdoor environment. Hence, the adaptive method may provide more satisfying results if navigating in accordance with an adjusted forecasted outdoor temperature. The adaptive method may use the adjusted forecasted outdoor temperature when determining the input signal. The input signal sent to a heating system may in fact correspond to the adjusted forecasted outdoor temperature. By using an adjusted forecasted outdoor temperature, the adaptive method may be more resilient and able to make appropriate heating adjustments even when extreme forecasted weather conditions that may be difficult to adjust properly to arise.

In one further embodiment, the method further comprises the steps of modifying at least one weather parameter by a weather parameter coefficient, and adjusting the at least one weather parameter coefficient with respect to the indoor temperature deviation. The adaptive method may make adjustment to how much each weather parameter impacts the heating of a specific house. Each weather parameter may be weighted by a weather parameter coefficient and the impact of each weather parameter may be adjusted by varying the weather parameter coefficient. The weather parameter coefficient may be adjusted with respect to a determined indoor temperature deviation. For instance, if the determined indoor temperature deviation following a specific forecasted weather condition was unsatisfying, a weather parameter coefficient may be modified next time the same weather condition is forecasted. The weather parameter coefficient may be modified in an attempt to reduce the indoor temperature deviation. The adaptive method may learn how much a specific weather parameter is affecting the heat exchange between the indoor environment of a building and the outdoor environment. Thus, the adaptive method may further adjust the heating of a specific building with respect to a forecasted weather condition.

In one further embodiment, the method comprises the steps of: identifying a forecasted weather phenomenon by comparing at least one forecasted weather parameter to a weather phenomenon database characterizing at least one weather phenomenon in terms of its weather parameters; providing at least one stored weather parameter coefficient with respect to the identified forecasted weather; updating the at least one stored weather parameter coefficient with respect to the indoor temperature deviation, wherein an identified weather phenomenon being the closest match to the forecasted weather phenomenon in terms of characterizing weather parameters. The adaptive method may thus recognize and identify a forecasted weather phenomenon based on a pre-determined weather phenomenon database in terms of its characterizing weather parameters. The adaptive method may thus store and repeatedly improve a set of weather parameter coefficients with respect to the indoor temperature deviation. The adaptive method may thus further adjust for a plurality of weather phenomena and access different configurations of weather parameter coefficients for efficient heating depending on what weather phenomena is being forecasted.

In one further embodiment, the method further comprising the step of adjusting the forecasted adjusted outdoor temperature with respect to historic data. The method may store or log information regarding adjustments, times, and the conditions of forecasted weather data from which an input signal was determined as historic data. The resulting indoor deviation may also be stored or logged as historic data. The method may continuously, or at specific time intervals, store or log this information. By accounting for historic data, improved adjustments to an adjusted forecasted outdoor temperature may be provided. This may further improve the energy efficiency and reduce the indoor temperature fluctuations.

In one further embodiment, the method further comprising a step of adjusting the forecasting time with respect to the indoor temperature deviation and/or historic data. By observing the indoor temperature deviation with respect to a varying forecasting time, the forecasting time may be adjusted to improve the duration of the forecasting time. For instance, the forecasting time may be set to be four hours into the future, i.e. forecasted weather data four hours into the future may be used when determining an input signal to the heating system at the present time. By varying the forecasting time, the adaptive method may operate with respect to different aims. A relatively long forecasting time may be used to provide a heating system with sufficient time to make heating adjustments. A relatively short forecasting time may be used so to reduce the risk of using outdated forecasted weather data. The forecasting time may thus be adjusted to balance these to aims against each other. This may provide a robust and efficient adaptive method. Furthermore, the forecasting time may be adjusted to a specific building. The rate of heating by the heating system of a wide range of different buildings may vary greatly and the forecasting time may be set to account for this wide range of heating rate, such that the heating system can appropriately heat the building preemptively to a forecasted weather data.

In one further embodiment, wherein a received forecasted weather parameter is interpolated using the forecasted weather parameter and historic data. Forecasted weather data may be interpolated allowing for an even greater precision when determining said input signal to the heating system. It may be of interest to interpolate forecasted weather data to allow for determining an input signal more frequently than what forecasted weather data originally allows for.

In one further embodiment, wherein said building specific coefficient is selected from a group of building specific coefficients comprising building construction, insulation, number of stories, number of windows, orientation, wind exposure, roof surface, roof material, roof color and ground type. The building to be heated may greatly affect the required heating of a heating system. The same amount of provided heat may result in different temperature increases of an indoor environment of a building when the same heating system is heating different buildings. The input signal may be adjusted to account for the wide variety of building properties affecting the heat exchange between an indoor environment of a building and an outdoor environment. By accounting for a building specific coefficient, energy efficiency may be improved. Fluctuations with respect to the indoor temperature may be reduced as well.

In one further embodiment, wherein the adaptive method is pre-calibrated to account for heat exchange conditions of a specific building prior to an initial controlling of a heating system. The adaptive method may thus reach a well-adjusted mode at a faster rate, thus improving energy savings and providing convenience to a user.

According to a second aspect of the invention, a computer program product comprising program code means for performing the adaptive method disclosed previously is provided. The program code may be run on a control unit for controlling a heating system, on an embedded system on a control heating system, or on a remote server. The program product may be written as to be executed efficiently while requiring relatively little computational power. This may allow for a program product to be run on relatively cheap hardware.

According to a third aspect of the invention, an apparatus for controlling a heating system of an indoor environment of a building is provided. The apparatus comprise a processor configured for performing the method according to any preceding claims; at least one temperature sensor; connecting means for connecting to the heating system, wherein the apparatus further has access to storing means for storing forecasted weather data and adjusted weather parameter coefficients. The apparatus may be configured for running the computer program product as previously disclosed. The computer program code may be configured to run variations of it, some of which being improved versions of it. The apparatus may be designed to be small and cheap. It may be designed to be installed in close proximity to a heating system in communicative connection with it. It may be configured to be installed in a place that is conveniently accessible by a user. The apparatus may be configured to work autonomously. The apparatus may be configured to take in any number of manual inputs from a user in order to execute the computer program code disclosed above or variations thereof.

In one further embodiment, the apparatus further comprises network-connectivity for sharing weather data and/or adjusted weather parameter coefficients and/or a building specific coefficient to any apparatus controlling a heating system of another building, and/or receiving weather data and/or adjusted weather parameter coefficients from any apparatus controlling a heating system of another building. By equipping the apparatus with network connectivity, the apparatus may be remotely controlled by a remote control unit. The apparatus may further comprise wireless network connectivity. A user may conveniently send and receive information regarding the heating of a building. Heating data may thus be collected for a wide variety of buildings, which may be analyzed such that one is provided with a greater insight how different weather parameters affect the heating and heat loss of buildings with respect to specific building coefficients. Through such an analysis, calibration of the method with respect to specific buildings may be facilitated, improving the efficacy of the method. If the apparatus running the computer program code has found satisfying adjustments, the apparatus may share these with another apparatus connected to a heating system or to a remote server. Wherever relevant, the two apparatuses, or the apparatus and the remote server, may share information amongst each other. The apparatus may also obtain forecasted weather data through its network connectivity.

In one further embodiment, the apparatus further comprises network-connectivity for sharing weather data and/or adjusted weather parameter coefficients and/or a building specific coefficient to a remote server; and/or receiving weather data and/or adjusted weather parameter coefficients from a remote server. The apparatus may thus store useful information remotely. If the apparatus would for any reason need to be replaced, a new apparatus may conveniently update its computer program code by accessing the weather data and/or adjusted weather parameter coefficients and/or a building specific coefficient. Thus, the apparatus may not have to be subjected to a prolonged adjustment phase.

According to a fourth aspect of the invention, an apparatus as disclosed above for use of controlling a heating system of an indoor environment of a building is provided. The apparatus may be specifically configured for controlling a heating system of an indoor environment of a building. The apparatus may thus be specifically adjusted for this purpose. This may provide even more improvements to energy efficiency, production cost, and reduced fluctuations in indoor temperature.

### Brief description of the drawings

The invention will in the following disclosure be described in more detail with reference to the enclosed drawings, wherein:
Fig. 1 is a flowchart illustrating one embodiment of the method according to the present disclosure.
Fig. 2 shows an overview of the forecasted weather data according to one embodiment.
Fig. 3 is a flowchart illustrating one embodiment of the method according to the present disclosure.
Fig. 4 is a flowchart illustrating one embodiment of the method according to the present disclosure.
Fig. 5 is a flowchart illustrating one embodiment of the method according to the present disclosure.
Fig. 6 is a flowchart illustrating one embodiment of the method according to the present disclosure.

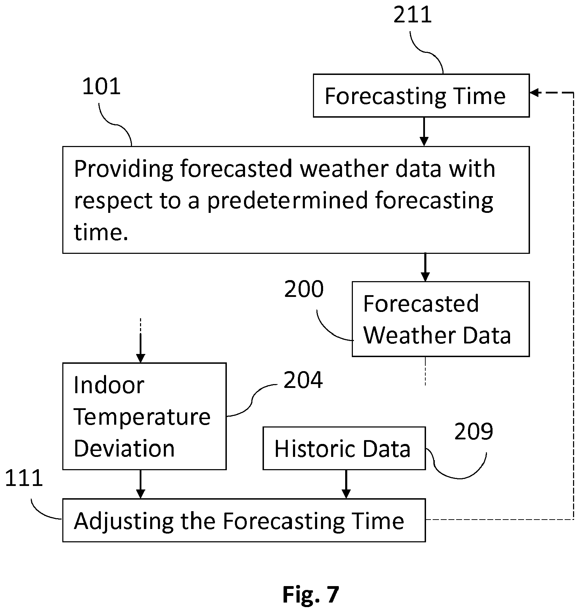

Fig. 7 is a flowchart illustrating one embodiment of the method according to the present disclosure.
Fig. 8 is a schematic overview of an apparatus for controlling a heating system according to one embodiment of the present disclosure.

### Detailed description of embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

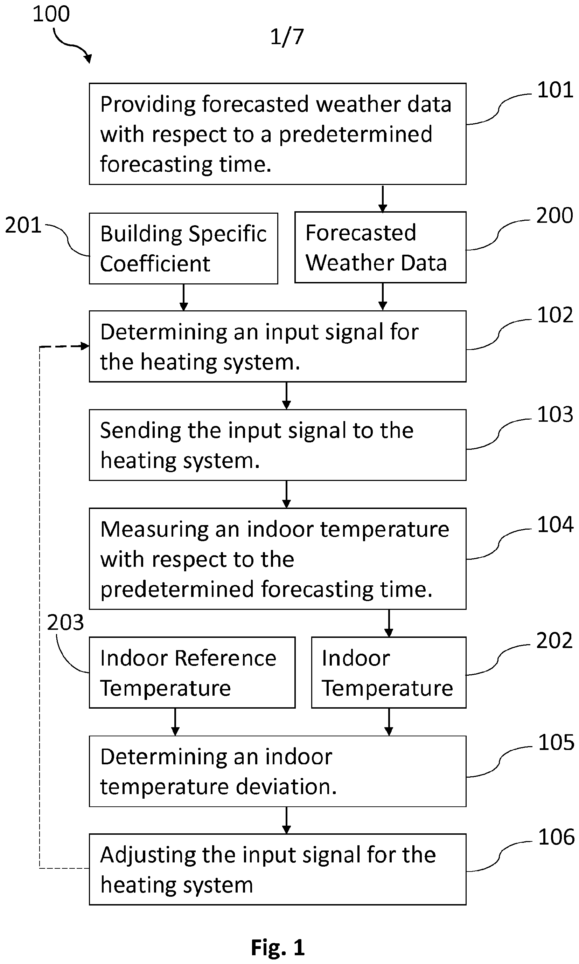

According to a first aspect of the invention, an adaptive method 100 for controlling a heating system is provided, see Fig. 1. The method comprises the steps of: providing 101 forecasted weather data 200 for a predetermined forecasting time 211; determining 102 an input signal for the heating system based on said forecasted weather data 200 and at least one building specific coefficient 201; sending 103 the input signal to the heating system for modifying the climate of said indoor environment, wherein the method further comprises the steps of measuring 104 an indoor temperature 202 with respect to the predetermined forecasting time; determining 105 an indoor temperature deviation by comparing the measured indoor temperature 202 with an indoor target temperature 203; adjusting 106 the input signal from weather data with respect to the indoor temperature deviation.

Before detailing each step of the adaptive method, the forecasted weather data 200 and the building specific coefficient 201 is clearly defined and explained in detail.

Forecasted weather data 200 may comprise a temperature, or a series of temperatures, for a selected local area over the course of a time period. These temperatures may be forecasted for a predetermined recurring time interval. The weather data 200 may further comprise information regarding at least one weather parameter selected from a group of weather parameters, said group at least comprising solar radiation, sun position, air humidity, atmospheric pressure, wind speed, wind direction, rainfall, snowfall and cloudiness. These may also be forecasted for a predetermined recurring time interval. The predetermined forecasting time may specify for which future time weather data 200 is used when providing 101 the forecasted weather data 200.

A building specific coefficient 201 is used to model the impact of a certain building specific property has on the heat exchange between an indoor environment of a building and an outdoor environment. Said building specific coefficient 201 is selected from a group of building specific coefficients representing a plurality of building specific properties, said group comprising building construction, type of heating generating system, type of heating distributing system, insulation, number of stories, number of windows, orientation, wind exposure, roof surface, roof material, roof color and ground type. The building specific coefficient 201 may be set to a predetermined value. A building specific coefficient 201 may be adjusted to be offset from the pre-determined value if a corresponding building specific property is found to have a net effect on said heat exchange. The building specific property may cause a net increase or a net decrease of a heat exchange from an indoor environment of a building to an outdoor environment. The adaptive method may be further configured to adjust the building specific coefficient 201. If a building specific property is predicted to result in a positive net effect, the corresponding building specific coefficient 201 may be increased. If a building specific property is predicted to have a negative net effect, the corresponding building specific coefficient 201 may be decreased. The at least one building specific coefficient may be used when pre-calibrating the method for a specific building. A satisfyingly adjusted building specific coefficient may be used to calibrate the method when applied to control a heating system of a similar house in order to improve the calibration.

Having detailed the forecasted weather data 200 and the at least one building specific coefficient 201, the aim now is to provide detailed information of each step of the adaptive method 100.

The first step 101 involves providing forecasted weather data 200 for a predetermined forecasting time. The adaptive method may provide the forecasted weather data 200 from a remote server. The forecasted weather data 200 may be provided from a device being at least momentarily communicatively connected to a remote server storing the forecasted weather data 200. The weather data may be associated with respect to time, having a distinct weather forecast for each time interval comprised in the weather data. The predetermined forecasting time may thus specify which of these distinct weather forecasts to access and be used by the adaptive method 100. The adaptive method 100 may, when convenient, modify the forecasted weather data prior to being provided by said adaptive method 100.

The next step 102 involves determining an input signal for the heating system based on said forecasted weather data 200 and at least one building specific coefficient 201. The input signal may be deduced from the forecasted weather data 200 and then modified with respect to the at least one building specific coefficient 201. The input signal may be an electric signal containing heating instructions with respect to forecasted weather data 200, while accounting for at least one building specific property. The input signal may be based on a heat equation known from atmospheric science. Since these are known, they will be omitted from this present disclosure. The input signal may indicate the required heat when accounting for all heat sources and heat drains of an indoor environment of a building. The required heat may be converted into said input signal in such a manner so that a heating system may comprehend the instructions with respect to heating that is comprised in the input signal and act accordingly. The input signal may directly correspond to a forecasted outdoor temperature.

The next step 103 involves sending the input signal to the heating system for modifying the climate of said indoor environment. The heating system may be configured to regulate the climate of an indoor environment with respect to a climate reference signal. The climate reference signal may comprise an indoor reference temperature. Upon receiving the input signal, the heating system may adjust its heating with respect to the forecasted weather data and the indoor reference temperature. The heating system may be configured to receive an input temperature and heat accordingly, in which case, the input signal is converted into a corresponding input temperature. Said input temperature may be the forecasted outdoor temperature.

The following steps 104 - 105 are self-explanatory. First, an indoor temperature is measured 104 at the predetermined forecasting time. Then, an indoor temperature deviation is determined 105 by comparing the measured indoor temperature 202 with an indoor reference temperature 203. The indoor temperature deviation may be defined as the measured indoor temperature 202 subtracted from the indoor reference temperature 203. In that case, if the indoor temperature deviation was found positive, the indoor environment was insufficiently heated. If the indoor temperature deviation was found negative, the indoor environment was excessively heated.

The method, according to a first aspect of the present disclosure, concludes with a step 106 of adjusting the input signal with respect to the indoor temperature deviation. Said adjustments may be made with respect to how the input signal is determined from the forecasted weather data 200 and the at least one building specific coefficient 201. The forecasted weather data 200 may be weighted differently, depending on the specific house to be heated or the continuous effect a particular forecasted weather data 200 may have on the indoor temperature 202. The weighing of weather data 200 may be adjusted in this last step.

As the adaptive method is used for controlling the heating system, information with respect to time, indoor temperature deviation, and forecasted weather data is being logged. Furthermore, the adaptive method may be configured to heat a variety of indoor environments of a building according to different indoor reference temperatures.

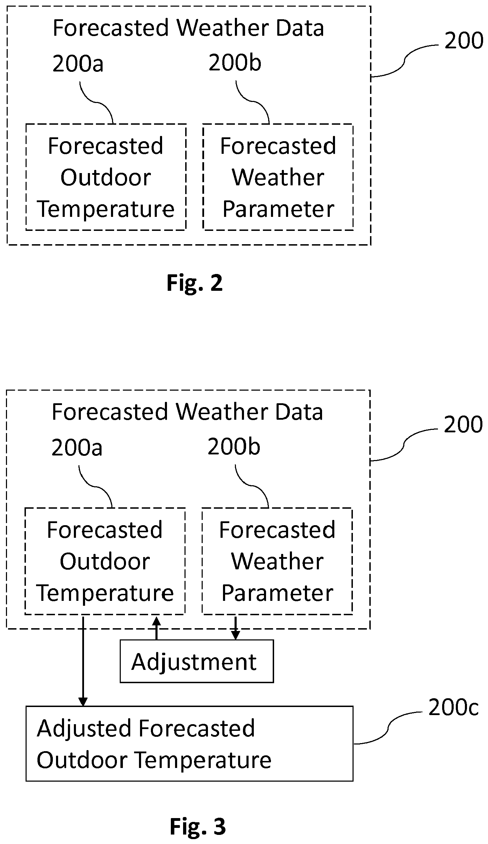

In one embodiment, as shown in Fig. 2, the forecasted weather data 200 comprises a forecasted outdoor temperature 200a and a forecasted weather parameter 200b. The adaptive method may use both pieces of information when calculating the required heat in response to the forecasted weather condition. Having calculated the required heat, an input signal is determined and sent to the heating system. With respect to the indoor temperature deviation, the input signal may be further adjusted, or, the relation of how said input signal is deduced to a forecasted outdoor temperature 200a and a forecasted weather parameter 200b may be adjusted.

In one further embodiment, as shown in Fig. 3, the method further comprises the step of providing a forecasted outdoor temperature 200a adjusted by at least one weather parameter 200b. The adaptive method may provide an adjusted forecasted outdoor temperature 200c from an external source, possibly the same source from which the forecasted weather data 200 is accessed from. The adaptive method may also by itself adjusted a forecasted outdoor temperature 200a with respect to at least one weather parameter 200b. For instance, a forecasted weather data 200 may indicate harsh sunlight. The forecasted outdoor temperature 200a may not clearly represent the available heat forecasted to be transferred from the outdoor environment to the indoor environment. The outdoor environment may thus contain more heat than projected, in part due to heated air near the ground surface, but also via sun rays radiating onto the building. The correction to the forecasted outdoor temperature 200a with respect to the at least one forecasted weather parameter 200b may be carried out by adding to, or subtracting from, the forecasted outdoor temperature 200a a term that is the at least one forecasted weather parameter 200b weighted by a factor having a unit of measurement such that the term is in a unit of temperature. The temperature scale used to describe any unit of temperature in the method may for instance be the Kelvin scale, however, the method is not limited to only handle temperatures described in this temperature scale. In the case where a plurality of weather parameters 200b are taken into consideration by the adaptive method 100, each weather parameter 200b may be weighed by a corresponding weather coefficient and added to or subtracted from the forecasted outdoor temperature 200a.

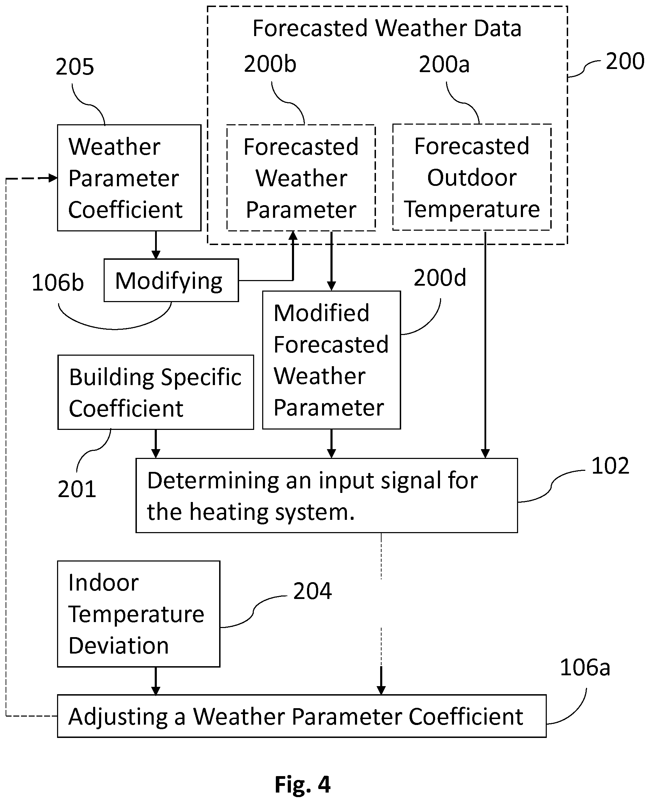

In one further embodiment, as shown in Fig. 4, the method further comprises the steps of modifying 106b at least one forecasted weather parameter 200b by a weather parameter coefficient 205, and adjusting 106a the least one weather parameter coefficient 205 with respect to the indoor temperature deviation 204. If more than one weather parameter coefficient 205 is in need of being modified, the adaptive method 100 may determine which one to adjust by a random number generator. The random number generator may allow for any of the weather parameter coefficients 205 corresponding to the accounted forecasted weather parameter 200b to be selected. However, the chance of selecting each weather parameter coefficient 205 to modify may be different. Similarly, if a plurality of building specific coefficient 201 is to be modified, the one to be adjusted may be selected by similar means.

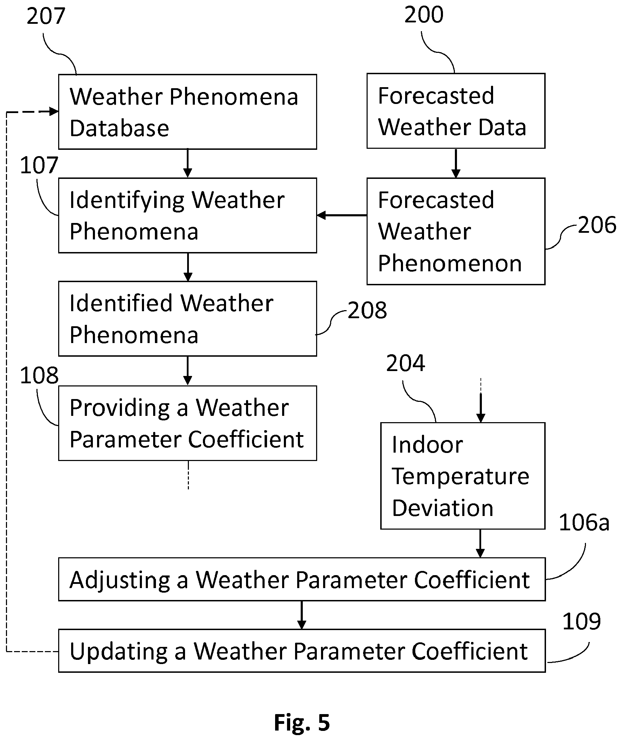

In one further embodiment, as shown in Fig. 5, the method comprises the steps of: identifying 107 a forecasted weather phenomenon 206 by comparing at least one forecasted weather parameter to a weather phenomenon database 207 characterizing at least one weather phenomenon in terms of its weather parameters; providing 108 at least one stored weather parameter coefficient with respect to the identified weather phenomenon 208; updating 109 the at least one stored weather parameter coefficient with respect to the indoor temperature deviation 204, wherein an identified weather phenomenon 208 being the closest match to the forecasted weather phenomenon 206 in terms of characterizing weather parameters.

The weather phenomena database 207 may be constructed prior to use, comprising any likely weather phenomena to occur, and characterized by their associated weather parameters. There may be different variations of a weather phenomenon, different in perhaps only intensity of a particular weather parameter. For instance, one weather phenomena could be classified as rain and a similar one as heavy rain, differing only in the intensity with respect to rainfall. The step of identifying a weather phenomenon requires determining the closest match in the weather phenomena database by comparing a set of forecasted weather parameters to each set of weather parameters characterizing each weather phenomena in the weather phenomena database. Each pair of weather parameters is compared and the difference, or the error, may be computed for each one in a set, for each weather phenomenon in the weather phenomena database 207. The closest match may be the one having the smallest overall error, wherein the overall error may have been determined by statistical means known in the prior art.

Furthermore, a set of threshold values for the deviation between a forecasted weather parameter and an associated weather parameter may be used. This, in principle, characterizes each weather phenomena in the weather phenomena database 207 by a set of characterizing weather parameter ranges.

If the identified weather phenomenon 208 is a perfect match to a forecasted weather phenomenon 206, i.e. all forecasted weather parameters are within each corresponding weather parameter range of an identified weather phenomenon, the associated weather parameter coefficients may be provided in response to the forecasted weather phenomenon 206. If the configuration of weather parameter coefficients has previously resulted in an as of yet unsatisfying result with respect to the indoor temperature deviation 204, one or more of the weather parameter coefficients corresponding to the one or more most deviating forecasted weather parameters may be randomly adjusted in an attempt to obtain a better result.

If the identified weather phenomenon 208 is not a perfect match to the forecasted weather phenomena 206, i.e. some forecasted weather parameter is outside the corresponding characterizing weather parameter range, the adaptive method 100 may preemptively adjust a corresponding weather parameter coefficient to reduce the resulting indoor temperature deviation 204. If a satisfying result of the indoor temperature deviation was obtained, the adaptive method may log the result. If a similar weather phenomenon is encountered a plurality of times, and a satisfying result is obtained successively with a particular set of weather parameter coefficients, the adaptive method 100 may update the weather phenomena database 207 and categorize the encountered weather phenomena along with the weather parameter coefficients.

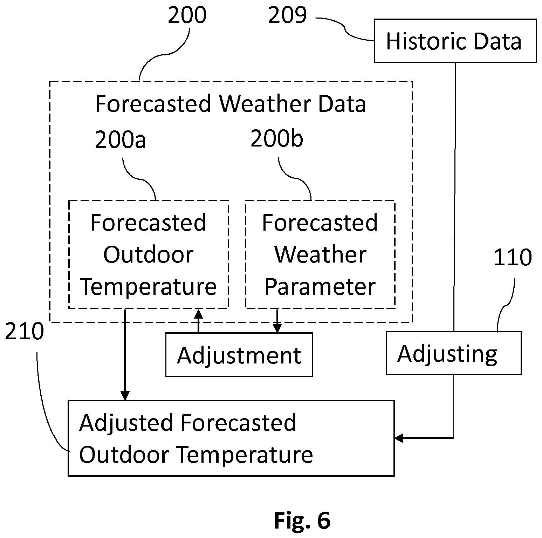

As shown in Fig. 6, the method may further comprise the step of adjusting 110 the forecasted adjusted outdoor temperature with respect to historic data 209. The adaptive method 100 may analyze historic data 209, i.e. logged data, in order to adjust an adjusted outdoor temperature 210 that have shown in the past to yield unsatisfying results with respect to the indoor temperature deviation. The adjusted forecasted outdoor temperature 210 may be directly modified, either increased or decreased, in order to further improve the indoor temperature deviation 204.

In one further embodiment, the method further comprising a step of adjusting 111 the forecasting time 211 with respect to the indoor temperature deviation 204 and/or historic data 209. The forecasting time may be adjusted to a specific building in order to account for the heating rate of a particular heating system. The forecasting time may also be adjusted to account for a rate of heat exchange between the indoor environment and the outdoor environment at the forecasted time. The former, the heating rate of a particular heating system may vary depending on what type of heating system put in place to heat the building and how the heat distribution system. Furthermore, the forecasting time may be adjusted with respect to the quality of said heating system and heat distribution system. For instance, the heat may be stored in a liquid during heat distribution. The distribution of heated liquid may be realized by a pump and a system of pipes which leads from a heat reserve to a device for transferring the heat in the liquid to the indoor environment. Such a device may be a radiator. The forecasting time may be adjusted as the adaptive method is put into action or be pre-calibrated using historic data. The forecasting time may also be adjusted with respect to the construction of the building to be heated and other building specific properties. For instance, the building may be constructed in a particular way which affects the rate of heat exchange between the indoor environment and the outdoor environment at the forecasted time, and the overall capability of the building to store heat. The forecasting time may be adjusted to account for this as well.

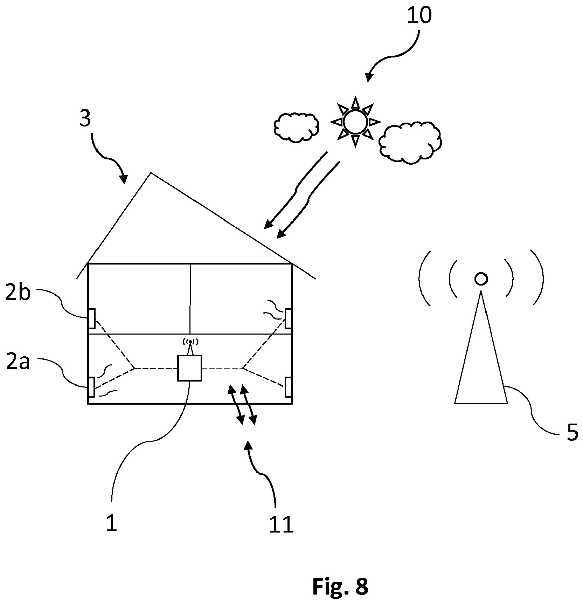

As has been described above, in the summary of the invention, the method may be captured in a computer program product comprising program code means for performing the adaptive method disclosed previously is provided. The program code may be run on a control unit for controlling a heating system, on an embedded system on a control heating system, or on a remote server. The computer program code made be configured to be run on an apparatus 1 for controlling a heating system 2a, 2b of an indoor environment of a building 3, as shown in Fig. 8.

Figure 8 further illustrates an embodiment wherein the apparatus 1 comprises a processor configured for performing the method according to any preceding claims; at least one temperature sensor; connecting means for connecting to the heating system (indicated by dashed lines), wherein the apparatus further has access to storing means for storing forecasted weather data and adjusted weather parameter coefficients. The apparatus may be configured to receive forecasted weather data from an external source. The forecasted weather data comprise information with respect to a forecasted weather condition 10. The forecasted weather condition may affect the heat exchange 11 between the indoor environment of a building 3 and the outdoor environment. The apparatus may be configured to control a plurality of heating systems, either in the same indoor environment in a building, or in separate indoor environments as depicted. The heating systems may further be controlled to heat said indoor environment (indicated by swirly lines) or be inactive depending on expected heating requirements.

The apparatus may further comprise network-connectivity for sharing weather data and/or adjusted weather parameter coefficients and/or a building specific coefficient to any apparatus controlling a heating system of another building, and/or receiving weather data and/or adjusted weather parameter coefficients and/or a building specific coefficient from any apparatus controlling a heating system of another building. The apparatus may further comprise network-connectivity for sharing weather data and/or adjusted weather parameter coefficients and/or a building specific coefficient to a remote server; and/or receiving weather data and/or adjusted weather parameter coefficients from a remote server.

The adaptive method may store and log heating data in conjunction with forecasted weather data to which heating adjustments have been made. Said heating adjustments and the forecasted weather data may be stored. This historic data may be shared amongst any user and to a database. The adaptive method may be pre-calibrated and adjusted with respect to this historic data to improve and speed up adjustments for a specific building.

The adaptive method may be configured to take in a plurality of indoor reference temperature and target temperature, each possibly corresponding to a different indoor building environment.

The weather parameter coefficients and the building specific coefficient may be time dependent, such that their value changes during a day cycle. This may improve the efficacy of the heating as heating conditions for a specific building may vary throughout a day cycle. The weather parameter coefficients and the building specific coefficients may further vary with seasons, having a specific value for each season.

## Claims

1. Method for controlling a heating system of an indoor environment of a building, said method comprising the steps of:
providing forecasted weather data for a predetermined forecasting time;
determining an input signal for the heating system based on said forecasted weather data and at least one building specific coefficient;
sending the input signal to the heating system for modifying the climate of said indoor environment,
wherein the method further comprises the steps of
measuring an indoor temperature with respect to the predetermined forecasting time;
determining an indoor temperature deviation by comparing the measured indoor temperature with an indoor target temperature;
adjusting the input signal with respect to the indoor temperature deviation.

2. Method according to claim 1, wherein the forecasted weather data comprises a forecasted outdoor temperature and a forecasted weather parameter, said weather parameter being selected from a group of weather parameters comprising solar radiation, sun position, air humidity, atmospheric pressure, wind speed, wind direction, rainfall, snowfall and cloudiness.

3. Method according to claim 1 or 2, the method further comprising the step of providing a forecasted outdoor temperature adjusted by at least one weather parameter.

4. Method according to claim 2 or 3, the method further comprising the steps of
modifying at least one weather parameter by a weather parameter coefficient, and
adjusting the at least one weather parameter coefficient with respect to the indoor temperature deviation.

5. Method according to claim 2, the method further comprising the steps of:
identifying a forecasted weather phenomenon by comparing at least one forecasted weather parameter to a weather phenomenon database characterizing at least one weather phenomenon in terms of its weather parameters;
providing at least one stored weather parameter coefficient with respect to the identified forecasted weather;
updating the at least one stored weather parameter coefficient with respect to the indoor temperature deviation,
wherein an identified weather phenomenon being the closest match to the forecasted weather phenomenon in terms of characterizing weather parameters.

6. Method according to claim 2, the method further comprising the step of adjusting the forecasted adjusted outdoor temperature with respect to historic data.

7. Method according to any preceding claims, the method further comprising a step of adjusting the forecasting time with respect to the indoor temperature deviation and/or historic data.

8. Method according to any preceding claims, wherein a received forecasted weather parameter is interpolated using the forecasted weather parameter and historic data.

9. Method according to any preceding claims, wherein said building specific coefficient is selected from a group of building specific coefficients comprising building construction, type of heating generating system, type of heating distributing system, insulation, number of stories, number of windows, orientation, wind exposure, roof surface, roof material, roof color and ground type.

10. Method according to any preceding claims, wherein said method further comprises the step of pre-calibrating said building specific coefficient, to account for heat exchange conditions of a specific building prior to an initial controlling of a heating system.

11. A computer program product comprising program code means for performing the steps of any of claims 1-10, wherein said program code is run on a control unit for controlling a heating system, on an embedded system on a control heating system, or on a remote server.

12. Apparatus for controlling a heating system of an indoor environment of a building, said apparatus comprising
a processor configured for performing the method according to any preceding claims;
at least one temperature sensor;
connecting means for connecting to the heating system,
wherein the apparatus further has access to storing means for storing forecasted weather data and adjusted weather parameter coefficients.

13. Apparatus according to claim 12, wherein the apparatus further comprises network-connectivity for
sharing weather data and/or adjusted weather parameter coefficients and/or a building specific coefficient to any apparatus controlling a heating system of another building, and/or
receiving weather data and/or adjusted weather parameter coefficients and/or a building specific coefficient from any apparatus controlling a heating system of another building.

14. Apparatus according to claim 12 or 13, wherein the apparatus further comprises network-connectivity for
sharing weather data and/or adjusted weather parameter coefficients and/or a building specific coefficient to a remote server; and/or
receiving weather data and/or adjusted weather parameter coefficients from a remote server.

15. Apparatus according to claim 12, 13 or 14 for use of controlling a heating system of an indoor environment of a building.
